# EUROPEAN PATENT SPECIFICATION

(11) **EP 3 544 077 B1**
(45) Date of publication and mention of the grant of the patent: **08.11.2023**
(21) Application number: 18805081.9
(22) Date of filing: 23.05.2018
(51) Int. Cl.: H01M 10/0587, H01M 50/107, H01M 50/152, H01M 50/167, H01M 50/186, H01M 50/195

(54) **CYLINDRICAL BATTERY COMPRISING ANTI-CORROSIVE GASKET**
ZYLINDRISCHE BATTERIE, UMFASSEND EINE ANTI-KORROSIVE DICHTUNG
BATTERIE CYLINDRIQUE COMPRENANT UN JOINT ANTI-CORROSIF

(30) Priority: 22.05.2017 KR 20170062792
(43) Date of publication of application: 25.09.2019
(73) Proprietor: LG Energy Solution, Ltd., Seoul 07335 (KR)
(72) Inventor: LEE, Byoung Gu, Daejeon 34122 (KR); JUNG, Sang Sok, Daejeon 34122 (KR); KIM, Do Gyun, Daejeon 34122 (KR); LEE, Byoung Kook, Daejeon 34122 (KR); SHIN, Hang Soo, Daejeon 34122 (KR); KIM, Chan Bae, Daejeon 34122 (KR)
(74) Representative: Plasseraud IP
(86) International application number: PCT/KR2018/005859
(87) International publication number: WO 2018/217017

(56) References cited:
- WO-A1-2014/081227
- KR-A- 20100 057 421
- KR-A- 20160 014 079
- KR-A- 20160 040 018
- KR-A- 20160 043 724
- KR-A- 20170 004 042
- KR-A- 20170 044 406

## Description

### [Technical Field]

This application claims the benefit of Korean Patent Application No. 2017-0062792 filed on May 22, 2017 with the Korean Intellectual Property Office.

The present invention relates to a cylindrical battery comprising a gasket, and more particularly to an anti-corrosion-treated cylindrical battery comprising an anti-corrosive gasket including a volatile corrosion inhibitor.

### [Background Art]

In general, a secondary battery is a battery that can be charged and discharged, unlike a primary battery, which cannot be charged. Such a secondary battery has been widely used as a power source for electronic devices, such as cellular phones, laptop computers, and camcorders, as well as electric automobiles. In particular, a lithium secondary battery, which has an operating voltage of 3.6V, has been rapidly increasingly used, since the capacity of the lithium secondary battery is about three times as large as the capacity of a nickel-cadmium battery or a nickel-hydride battery, which is mainly used as a power source for electronic devices, and the energy density of the lithium secondary battery per unit weight is high.

Such a lithium secondary battery mainly uses a lithium-based oxide and a carbon material as a positive electrode active material and a negative electrode active material, respectively. In addition, the lithium secondary battery may be classified as a prismatic battery, a cylindrical battery, or a pouch-shaped battery.

A lithium ion secondary battery includes an electrode assembly, in which a positive electrode, a separator, and a negative electrode are sequentially disposed, and a sheathing member, in which the electrode assembly is received together with an electrolytic solution in a sealed state. In particular, the sheathing member of the cylindrical battery includes a cylindrical can having an open end and a cap assembly coupled to the open end of the cylindrical can in a sealed state.

In general, a gasket is interposed between the cylindrical can and the cap assembly in order to seal the cylindrical battery. The gasket of the cylindrical battery is made of a polymer resin, such as polypropylene. However, a crimping unit of the cylindrical battery is corroded in high-temperature and high-humidity conditions, and therefore there is a strong necessity for improvement thereto.

Patent Document 1 discloses an anti-corrosive washer including a corrosion inhibitor and a base resin. The anti-corrosive washer is loaded on the upper end of a cap assembly of a cylindrical battery in order to prevent a crimping unit of the cylindrical battery from being corroded. However, experiments reveal that the anti-corrosive washer generally provides desired anti-corrosion effects only for about one month in normal-temperature and normal-humidity conditions.

Patent Document 2 discloses an anti-corrosive tube including a corrosion inhibitor. However, the results of comparative experiments carried out in conditions similar to those of the following Examples reveal that 14 of 50 batteries were corroded, which indicates that the anti-corrosive tube cannot provide sufficient anti-corrosion effects. In contrast, according to the present invention, only one of 30 batteries was corroded.

In Patent Document 2, it is not possible to properly prevent a portion of the battery that may be mainly corroded, i.e. a crimping unit of the battery, from being corroded. The portion of the battery that may be mainly corroded is a crimping unit of the battery, which is a cut portion of a metal can of the battery. The anti-corrosive tube cannot effectively prevent the portion of the battery that may be mainly corroded from being corroded.

Not only are the effects achieved by the anti-corrosive tube disclosed in Patent Document 2 unsatisfactory, but it is also difficult to manufacture the anti-corrosive tube. The anti-corrosive tube is manufactured by applying hot air to a polymer resin in order to deform the polymer resin, wrapping a cylindrical can with a tube, and making the tube shrink. In contrast, the process of manufacturing the anti-corrosive gasket is simple, since it is sufficient to add a corrosion-inhibiting material to a general gasket at the time of manufacturing the gasket.

In the case in which a cylindrical battery is used in an electric automobile, which is expected to be in high demand in the future, for a long period of time or in high-temperature and high-humidity environments in the summer, it is known that it is not possible to solve a problem of corrosion occurring at a crimping unit of the battery. Anti-corrosion of a cylindrical battery mounted in a hybrid electric vehicle is connected directly with the safety of passengers in the vehicle as well as the performance of the vehicle based on an increase in the lifespan of the battery. However, clear solutions thereto have not yet been proposed.

### [Disclosure]

### [Technical Problem]

It is an object of the present invention to provide an anti-corrosion-treated cylindrical battery that is capable of preventing the end of a crimping unit of the battery from being corroded in high-temperature and high-humidity conditions for a long period of time.

### [Technical Solution]

In a first aspect of the present invention, the above and other objects can be accomplished by the provision of an anti-corrosion-treated cylindrical battery having an electrode assembly, including a positive electrode, a negative electrode, and a separator, mounted therein, the anti-corrosion-treated cylindrical battery including a cylindrical can having an open upper end, a cap assembly coupled to the cylindrical can via a crimping unit located at the outer circumferential surface of the upper part of the cylindrical can, the crimping unit being formed by bending a portion of the open upper end inwards, and an anti-corrosive gasket interposed between the cylindrical can and the cap assembly, wherein the anti-corrosive gasket includes a volatile corrosion inhibitor, including a polymer resin and a sodium-nitrate-based material, and a base resin.

In a second aspect of the present invention, 1 to 30 weight percent of the volatile corrosion inhibitor may be provided based on 100 weight percent of the base resin, 3 to 30 weight percent of the sodium-nitrate-based material may be provided based on 100 weight percent of the polymer resin, and the sodium-nitrate-based material may be at least one of NaNO₂ and NaNo₃, the sodium-nitrate-based material being dispersed in the anti-corrosive gasket.

In a third aspect of the present invention, the polymer resin and the base resin may be identical to each other or different from each other, and each of the polymer resin and the base resin may be one or a mixture of two or more selected from the group consisting of polypropylene (PP), polybutylene terephthalate, polyethylene, polyethylene terephthalate, Teflon, polytetrafluoroethylene, rayon, mixed yarn, polyviscose, and polynosic.

In a fourth aspect of the present invention, each of the polymer resin and the base resin may be polypropylene (PP) .

In a fifth aspect of the present invention, the sodium-nitrate-based material may be dispersed in the anti-corrosive gasket in a crystalline state, and gamma-iron (III) oxide (γ-Fe₂O₃) having a thickness ranging from 10Å to 1000 Å may be formed at the end of the crimping unit of the cylindrical can due to the sodium-nitrate-based material.

In a sixth aspect of the present invention, the cap assembly may include a top cap, configured to seal the open end of the cylindrical can, and a safety vent, one surface of which contacts the side surface, the upper surface, and the lower surface of the top cap and the other surface of which is bent so as to contact the inner circumferential surface of the gasket, the safety vent being electrically connected to the electrode assembly.

In a seventh aspect of the present invention, the cap assembly may include a top cap configured to seal the open end of the cylindrical can, the top cap being disposed so as to contact a protruding portion of the gasket, a positive temperature coefficient (PTC) element disposed so as to contact the top cap, and a safety vent, one surface of which contacts the PTC element and a portion of the other surface of which is disposed so as to contact the gasket.

In an eighth aspect of the present invention, the anti-corrosion-treated cylindrical battery may further include a current interrupt device welded to the lower end of the safety vent, the lower part of the current interrupt device being configured so as to be connectable to the electrode assembly.

In a ninth aspect of the present invention, there is provided a battery pack including a plurality of cylindrical batteries according to the present invention, wherein the cylindrical batteries are electrically connected to each other.

In a tenth aspect of the present invention, the battery pack may be used as a power source for at least one middle- or large-sized device selected from the group consisting of a power tool, an electric automobile, such as an electric vehicle (EV), a hybrid electric vehicle (HEV), or a plug-in hybrid electric vehicle (PHEV), an electric truck, an electric commercial vehicle, and a power storage system.

In an eleventh aspect of the present invention, there is provided a method of manufacturing an anti-corrosion-treated cylindrical battery, the method including preparing and pulverizing a sodium-nitrate-based material, which is at least one of NaNO₂ and NaNo₃, mixing the pulverized sodium-nitrate-based material with a polymer resin to manufacture a volatile corrosion inhibitor, mixing the volatile corrosion inhibitor with a base resin to manufacture an anti-corrosive gasket, and interposing the anti-corrosive gasket between a cylindrical can, having an electrode assembly mounted therein, and a cap assembly, coupled to the cylindrical can via a crimping unit located at the outer circumferential surface of the upper part of the cylindrical can, the crimping unit being formed by bending a portion of an open upper end of the cylindrical can inwards.

In a twelfth aspect of the present invention, the method may further include, after the step of interposing the anti-corrosive gasket between the cylindrical can and the cap assembly, generating at least one of nitrous acid (HNO₂) and nitric acid (HNo₃) through a reaction between the sodium-nitrate-based material in the anti-corrosive gasket and moisture and oxidizing the surface of the cylindrical can through at least one of nitrous acid (HNO₂) and nitric acid (HNo₃) to form gamma-iron (III) oxide (γ-Fe₂O₃) having a thickness ranging from 10Å to 1000 Å.

### [Brief Description of Drawings]

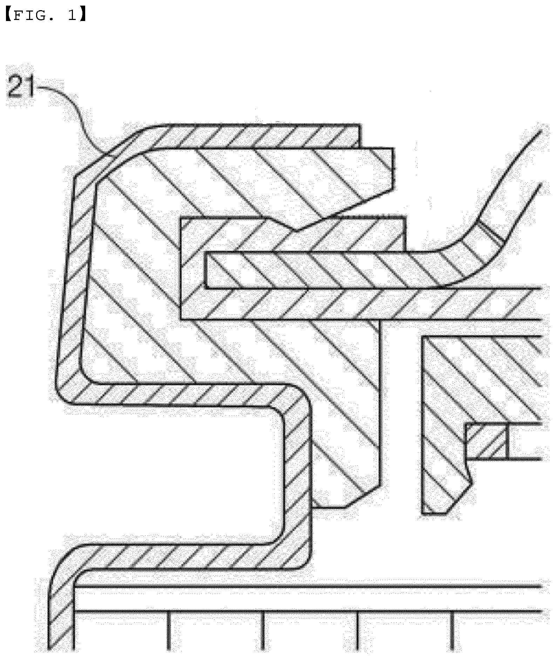

FIG. 1 is a sectional view showing one side of a battery in which an anti-corrosive gasket according to the present invention is mounted.
FIG. 2 is a sectional view showing a cylindrical battery including an anti-corrosive gasket according to an embodiment of the present invention.
FIG. 3 is a sectional view showing a cylindrical battery including an anti-corrosive gasket according to another embodiment of the present invention.

### [Detailed Description of the Invention]

In order to accomplish the above object, a cylindrical battery according to an embodiment of the present invention, which is a cylindrical battery having an electrode assembly, including a positive electrode, a negative electrode, and a separator, mounted therein, includes a cylindrical can having an open upper end, a cap assembly coupled to the cylindrical can via a crimping unit located at the outer circumferential surface of the upper part of the cylindrical can, the crimping unit being formed by bending a portion of the open upper end inwards, and an anti-corrosive gasket interposed between the cylindrical can and the cap assembly, wherein the anti-corrosive gasket includes a volatile corrosion inhibitor, including a polymer resin and a sodium-nitrate-based material, and a base resin. 1 to 30 weight percent of the volatile corrosion inhibitor may be provided based on 100 weight percent of the base resin, 3 to 30 weight percent of the sodium-nitrate-based material may be provided based on 100 weight percent of the polymer resin, the sodium-nitrate-based material may be at least one of NaNO₂ and NaNo₃, the sodium-nitrate-based material being dispersed in the anti-corrosive gasket in a crystalline state, and gamma-iron (III) oxide (γ-Fe₂O₃) having a thickness ranging from 10Å to 1000 Å may be formed at the end of the crimping unit of the cylindrical can due to the sodium-nitrate-based material.

The polymer resin and the base resin may be identical to each other or different from each other, and each of the polymer resin and the base resin may be one or a mixture of two or more selected from the group consisting of polypropylene (PP), polybutylene terephthalate, polyethylene, polyethylene terephthalate, Teflon, polytetrafluoroethylene, rayon, mixed yarn, polyviscose, and polynosic. In particular, each of the polymer resin and the base resin may be polypropylene (PP). The material for the gasket is disclosed in Patent Document 1, and therefore a detailed description thereof will be omitted.

The crimping unit is formed at the upper end of the cylindrical can such that the cap assembly can be mounted to the open end of the cylindrical can. More specifically, the crimping unit is formed by beading the upper end of the cylindrical can such that an indentation is formed at the inside of the cylindrical can, placing the gasket on the open end of the cylindrical can, sequentially inserting the outer circumferences of a top cap, a PTC element, and a safety vent into the gasket, and bending the upper end of the cylindrical can inwards. As a result, the crimping unit is formed in a shape that surrounds the gasket located at the inside of the crimping unit. The cap assembly is mounted to the cylindrical can by crimping and pressing.

The crimping unit is configured to have a structure in which the end of the crimping unit is bent inwards such that the cap assembly can be stably mounted to the open upper end of the cylindrical can in the state in which the gasket is interposed therebetween. The side wall of the crimping unit extends vertically in the same manner as the side surface of the battery.

The material for the cylindrical can 20 is not particularly restricted. The cylindrical can may be made of any one of a stainless steel, steel, aluminum, and an equivalent thereof. The cylindrical can 20 is made of a metal component, since it is necessary for the cylindrical can to exhibit conductivity. Such a metal component may be easily corroded by external moisture.

A cap assembly 30 according to an embodiment of the present invention may include a top cap, configured to seal the open end of the cylindrical can 20, and a safety vent 36, one surface of which contacts the side surface, the upper surface, and the lower surface of the top cap and the other surface of which is bent so as to contact the inner circumferential surface of the gasket 40, the safety vent 36 being electrically connected to the electrode assembly 10. The cap assembly 30 may be included in a cylindrical battery 100.

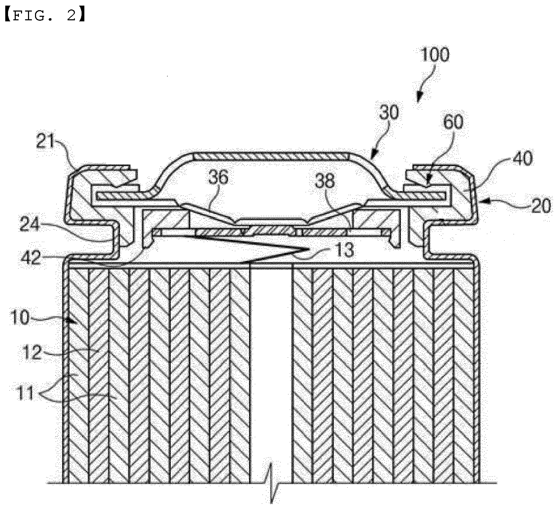

A cylindrical battery 100 according to an embodiment of the present invention is shown in FIG. 2. Referring to FIG. 2, the cylindrical battery 100 includes a cylindrical can 20, in which an electrode assembly 10 is received together with an electrolytic solution, a cap assembly 30 coupled to the open end of the cylindrical can 20 in a sealed state, and a gasket 40 interposed between the cylindrical can 20 and the cap assembly 30.

The cap assembly 30 may include a top cap, configured to seal the open end of the cylindrical can 20, and a safety vent 36, one surface of which contacts the side surface, the upper surface, and the lower surface of the top cap and the other surface of which is bent so as to contact the inner circumferential surface of the gasket 40, the safety vent 36 being electrically connected to the electrode assembly 10.

In the case in which a battery including such a cap assembly 30 is used as a power source of a power tool such as an electric drill, the battery may provide instantaneous high output, and may be strongly resistant to external physical impacts such as vibration and dropping.

Particularly, in the cap assembly 30, which is configured such that the safety vent 36 is bent to surround the top cap, the contact surface between the safety vent 36 and the top cap may form at least one connection part. The connection part may be formed by welding. The term "welding" used in the present invention may conceptually include a fastening method such as soldering as well as the literal meaning of welding, such as laser welding, ultrasonic welding, and resistance welding. The welding may be performed at the time of assembling the cap assembly 30, or may be performed in the state in which the cap assembly 30 is mounted to the cylindrical can 20.

The safety vent 36 serves to interrupt the flow of current or to exhaust gas when the inner pressure of the battery increases. The safety vent may be made of a metal material. The thickness of the safety vent 36 may be changed depending on the material or structure thereof. The thickness of the safety vent is not particularly restricted, as long as the safety vent can rupture to exhaust gas when a predetermined level of pressure is generated in the battery. For example, the thickness of the safety vent may range from 0.2 to 0.6 mm.

The thickness of the portion of the top cap that contacts the safety vent 36 is not particularly restricted, as long as the top cap can protect various elements of the cap assembly 30 from external pressure. For example, the thickness of the portion of the top cap may range from 0.3 to 0.5 mm. If the thickness of the portion of the top cap is too small, it is difficult for the top cap to exhibit mechanical strength, which is undesirable. If the thickness of the portion of the top cap is too large, on the other hand, the size and weight of the top cap are increased, whereby the capacity of a battery having the same specifications may be reduced, which is also undesirable. The gasket 40 is generally configured in the form of a cylinder, opposite ends of which are open. One end of the gasket, which faces the interior of the cylindrical can 20, may be bent perpendicularly toward the center of the cylindrical can so as to be located in the open part of the cylindrical can 20, i.e. in the crimping unit. The other end of the gasket 40 initially extends in a straight line in the axial direction of the cylindrical gasket 40. When the gasket is pushed toward the cylindrical can 20, the gasket is bent perpendicularly toward the center of the cylindrical can such that the inner circumferential surface and the outer circumferential surface of the gasket are folded in the state of being in tight contact with the top cap of the cap assembly 30 and the inner side surface of the cylindrical can 20, respectively.

The gasket 40 is made of an elastic polymer resin that exhibits high electrical insulativity. It is necessary for such a polymer resin to exhibit high electrical insulativity, resistance to impact, elasticity, and durability. In general, it is necessary for the gasket to exhibit high insulativity, to exhibit high chemical resistance to an electrolytic solution for preventing the leakage of the electrolytic solution, and to exhibit high thermal resistance for maintaining the air-tightness of the gasket in the case of severe conditions in the battery, such as high temperature or high humidity. The gasket is generally made of polypropylene. However, the present invention is not limited thereto. In addition, the gasket 40 includes a volatile corrosion inhibitor.

The electrode assembly 10 may include two electrode plates 11, which have different polarities and are configured in the form of large-sized plates that can be wound in the form of a roll, and a separator 12 interposed between the electrode plates 11 in order to isolate the electrode plates 11 from each other or disposed at the left side or the right side of one of the electrode plates 11. The electrode assembly may be wound in the form of a jelly roll. Alternatively, a positive electrode plate having a predetermined size and a negative electrode plate having a predetermined size may be stacked in the state in which a separator 12 is interposed therebetween.

Each of the electrode plates 11 is configured to have a structure in which active material slurry is applied to a metal foil type or metal mesh type current collector including aluminum or copper. Slurry is generally formed by stirring a granular active material, an auxiliary conductor, a binder, and a plasticizer in the state in which a solvent is added. The solvent is removed in the following process. Non-coated parts, to which the slurry is not applied, may be provided at the start portion and the end portion of the current collector in the direction in which each of the electrode plates 11 is wound. A pair of leads corresponding to respective electrode plates 11 is attached to the non-coated parts. A first lead 13, which is attached to the upper end of the electrode assembly 10, is electrically connected to the cap assembly 30, and a second lead (not shown), which is attached to the lower end of the electrode assembly 10, is connected to the bottom of the cylindrical can 20. Of course, both of the first lead 13 and the second lead may extend toward the cap assembly 30. The electrode assembly 10 may be disposed on a first insulation plate (not shown), which is installed on the bottom of the cylindrical can 20, and a second insulation plate (not shown) may be disposed at the upper end of the electrode assembly 10. The first insulation plate insulates the electrode assembly 10 and the bottom of the cylindrical can 20 from each other, and the second insulation plate insulates the electrode assembly 10 and the cap assembly 30 from each other.

The cylindrical can 20 is made of a lightweight conductive metal material such as aluminum or an aluminum alloy, and has a cylindrical structure having an open upper end and a closed lower end. The electrode assembly 10 and the electrolytic solution (not shown) are received in the cylindrical can 20. The electrolytic solution serves to move lithium ions generated as the result of an electrochemical reaction of the electrode plates 11 at the time of charging and discharging the secondary battery 100. The electrolytic solution may be a non-aqueous organic electrolytic solution, which is a mixture of lithium salt and a high-purity organic solvent, or a polymer electrolyte. However, the kind of electrolytic solution is not pertinent hereto.

Meanwhile, a center pin (not shown) for preventing the electrode assembly 10, wound in the form of a jelly roll, from being unwound while serving as a path along which gas moves in the secondary battery 100 may be inserted into the center of the cylindrical can 20. A beading part 24, which is bent inwards from the outside by pressing, is provided at the upper part of the cylindrical can 20, i.e. the part of the cylindrical can above the upper end of the electrode assembly 10, in order to prevent upward and downward movement of the electrode assembly 10.

The cap assembly 30 is assembled to the open part of the cylindrical can 20 in the state of being sealed via the gasket 40. The cap assembly 30 includes a top cap and a safety vent 36. The top cap has an electrode terminal (not shown) formed so as to be electrically connected to the outside. The safety vent 36 is bent so as to surround the outer circumferential surface of the top cap.

A cylindrical battery 100 according to an embodiment of the present invention may further include a current interrupt device welded to the lower end of the safety vent 36, the lower part of the current interrupt device being configured so as to be connectable to the electrode assembly 10. Specifically, the center of the safety vent 36 protrudes in a convex shape and is welded to the current interrupt device (CID) 38. The current interrupt device 38 may be deformed together with the safety vent 36 depending on the inner pressure of the secondary battery 100. The current interrupt device may be classified as a CID gasket or a CID filter.

A cylindrical battery 100 according to an embodiment of the present invention may further include an auxiliary gasket. The auxiliary gasket 42 is a gasket for the current interrupt device 38, which is formed so as to surround the outer circumferential surface of the current interrupt device 38. In particular, the auxiliary gasket 42 contacts the upper part and the side part of the current interrupt device 38 at the outer circumferential surface of the current interrupt device 38 in order to support the upper part and the side part of the current interrupt device 38. In addition, the auxiliary gasket 42 serves to electrically isolate the current interrupt device 38 and the safety vent 36 from each other, except for the contact portion between the protrusion of the safety vent 36 and the current interrupt device 38.

In general, in the cylindrical battery, a positive electrode lead, which is welded to positive electrode foil of the jelly-roll type electrode assembly 10, is electrically connected to the cap assembly 30 while being connected to a terminal protruding from the upper end of the top cap, and a negative electrode lead, which is welded to negative electrode foil of the jelly-roll type electrode assembly 10, is connected to the closed end of the cylindrical can 20, whereby the cylindrical can 20 itself constitutes a negative electrode terminal. The material for the cylindrical can 20 is not particularly restricted. The cylindrical can may be made of any one of a stainless steel, steel, aluminum, and an equivalent thereof. An electrolytic solution is injected into the cylindrical can 20 in the state in which the electrode assembly 10 is received in the cylindrical can 20, and the cap assembly 30 is mounted to the open end of the cylindrical can 20 in a sealed state, whereby the assembly of the secondary battery is completed.

A secondary battery according to an embodiment of the present invention may be a lithium (ion) secondary battery, which exhibits high energy density, discharge voltage, and output stability. Such a lithium (ion) secondary battery includes a positive electrode, a negative electrode, a separator 12, and a non-aqueous electrolytic solution containing lithium salt. The positive electrode may be manufactured, for example, by applying a mixture of a positive electrode active material, a conductive agent, and a binder to a positive electrode current collector and drying the mixture. A filler may be further added to the mixture as needed. The negative electrode may be manufactured by applying a negative electrode active material to a negative electrode current collector and drying the same. The above-described components may be further included as needed. The separator 12 is interposed between the positive electrode and the negative electrode. An insulative thin film that exhibits high ion permeability and mechanical strength is used as the separator. The non-aqueous electrolytic solution containing lithium salt comprises a non-aqueous electrolytic solution and lithium salt. A liquid non-aqueous electrolytic solution, a solid electrolyte, or an inorganic solid electrolyte is used as the non-aqueous electrolytic solution. The current collector, the electrode active material, the conductive agent, the binder, the filler, the separator 12, the electrolytic solution, and the lithium salt are well known in the art to which the present invention pertains, and therefore a detailed description thereof will be omitted.

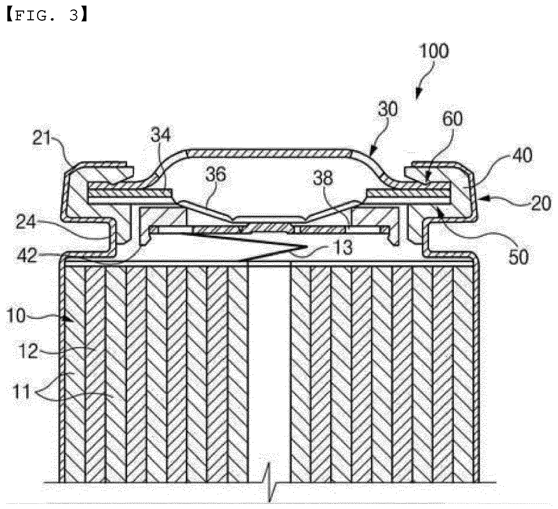

A cylindrical battery 100 according to another embodiment of the present invention is shown in FIG. 3. Elements having the same reference numerals as the reference numerals described with reference to FIG. 2 are corresponding members and perform corresponding functions. Referring to FIG. 3, the cap assembly 30 may include a top cap configured to seal the open end of the cylindrical can 20, the top cap being disposed so as to contact a protruding portion of the gasket 40, a positive temperature coefficient (PTC) element 34 disposed so as to contact the top cap, and a safety vent 36, one surface of which contacts the PTC element 34 and a portion of the other surface of which is disposed so as to contact the gasket 40.

The gasket 40 is the same as the anti-corrosive gasket described with reference to FIG. 2.

When the inner temperature of the battery increases, the resistance of the PTC element 34 is greatly increased in order to interrupt the flow of current. The thickness of the PTC element 34 may be changed depending on the material or structure thereof. For example, the thickness of the PTC element 34 may range from 0.2 to 0.4 mm. If the thickness of the PTC element 34 is greater than 0.4 mm, the inner resistance of the PTC element may be increased, and the size of the battery may be increased, whereby the capacity of a battery having the same specifications may be reduced. If the thickness of the PTC element 34 is less than 0.2 mm, on the other hand, it is difficult for the PTC element to achieve the desired current interruption effect at high temperatures, and the PTC element may be easily destroyed even by weak external impacts. Consequently, the thickness of the PTC element 34 may be appropriately set within the above thickness range in consideration of the above matters together.

The thickness of the portion of the top cap that contacts the PTC element 34 is not particularly restricted, as long as the top cap is capable of protecting various elements of the cap assembly 30 from external pressure. For example, the thickness of the portion of the top cap may range from 0.3 to 0.5 mm. If the thickness of the portion of the top cap is too small, it is difficult for the top cap to exhibit mechanical strength, which is undesirable. If the thickness of the portion of the top cap is too large, on the other hand, the size and weight of the top cap are increased, whereby the capacity of a battery having the same specifications may be reduced, which is also undesirable.

A secondary battery including the cap assembly 30, which includes the top cap, the PTC element 34, and the safety vent, as described above, may be used as a power source for a cellular phone, a laptop computer, etc. that stably provides a predetermined output.

The present invention may provide a battery pack including a plurality of lithium secondary batteries according to the embodiment of the present invention manufactured as described above, wherein the lithium secondary batteries are electrically connected to each other. The battery pack may be used as a power source for at least one middle- or large-sized device selected from the group consisting of a power tool, an electric automobile, such as an electric vehicle (EV), a hybrid electric vehicle (HEV), or a plug-in hybrid electric vehicle (PHEV), an electric truck, an electric commercial vehicle, and a power storage system.

Experiments were carried out in order to examine the anti-corrosion characteristics of the anti-corrosive gasket according to the present invention and the anti-corrosive washer according to Patent Document 1.

### <Manufacture of anti-corrosive material>

NaNO₂ was uniformly blended at normal temperature and normal pressure until NaNO₂ had uniform properties, and was then finely pulverized. 3 weight percent of pulverized NaNO₂ and 97 weight percent of molten polypropylene were mixed in order to obtain a volatile corrosion inhibitor (VCI) .

The volatile corrosion inhibitor, as a base resin, and polypropylene (for a washer), polyethylene terephthalate (for a tube), or polybutylene terephthalate (for a gasket) were mixed at a ratio of 5:100 (weight percent), and then the mixture was injected into a mold in order to manufacture a product having the above-described shape.

### <Example 1>

An anti-corrosive gasket manufactured according to <Manufacture of anti-corrosive material> and a general washer were applied to a cap assembly in order to manufacture a cylindrical secondary battery.

### <Example 2>

An anti-corrosive gasket and an anti-corrosive washer manufactured according to <Manufacture of anti-corrosive material> were applied to a cap assembly in order to manufacture a cylindrical secondary battery.

### <Example 3>

An anti-corrosive gasket manufactured according to <Manufacture of anti-corrosive material> was applied to a cap assembly in order to manufacture a cylindrical secondary battery. In manufacturing the cylindrical secondary battery, a general washer and a general tube manufactured according to <Manufacture of anti-corrosive material> excluding the volatile corrosion inhibitor were used.

### <Comparative Example 1>

A general gasket and a general washer were applied to a cap assembly in order to manufacture a cylindrical secondary battery.

### <Comparative Example 2>

A general gasket and an anti-corrosive washer manufactured according to <Manufacture of anti-corrosive material> were applied to a cap assembly in order to manufacture a cylindrical secondary battery.

### <Comparative Example 3>

The cylindrical secondary battery of Comparative Example was inserted into an anti-corrosive tube manufactured according to <Manufacture of anti-corrosive material>, and hot air was applied thereto in order to manufacture a cylindrical secondary battery coated with the anti-corrosive tube. In manufacturing the cylindrical secondary battery, a general washer and a general gasket manufactured according to <Manufacture of anti-corrosive material> excluding the volatile corrosion inhibitor were used.

### <Comparative Example 4>

An anti-corrosive washer manufactured according to <Manufacture of anti-corrosive material> was applied to a cap assembly in order to manufacture a cylindrical secondary battery. In manufacturing the cylindrical secondary battery, a general gasket and a general tube manufactured according to <Manufacture of anti-corrosive material> excluding the volatile corrosion inhibitor were used.

### <Experimental Example 1>

Battery cells including anti-corrosive washers and anti-corrosive gaskets manufactured according to <Manufacture of anti-corrosive material> in the following conditions 1) to 4) were stored at normal temperature and normal humidity for one month in order to observe whether the battery cells were corroded.

General washers and general gaskets were manufactured according to <Manufacture of anti-corrosive material> excluding the volatile corrosion inhibitor.
1) General washer + general gasket (Comparative Example 1)
2) General washer + anti-corrosive gasket (Example 1)
3) Anti-corrosive washer + general gasket (Comparative Example 2)
4) Anti-corrosive washer + anti-corrosive gasket

### (Example 2)

After one month, no corrosion was observed from the ends of crimping units of the battery cells in all of the conditions 1) to 4). Consequently, it can be seen that, even in the case in which general washers and general gaskets are applied, corrosion of the battery cells can be prevented in normal-temperature and normal-humidity conditions.

### <Experimental Example 2>

The cylindrical secondary batteries manufactured according to Example 1, Example 2, and Comparative Examples 1 to 3 were stored in a chamber, in which high-temperature and high-humidity conditions (65°C and 900) were maintained, for two weeks in order to observe whether the cylindrical secondary batteries were corroded.

The results are shown in Table 1 below.

**[Table 1]**

| | Occurrence of corrosion (number of corroded batteries /total number of batteries) |
|---|---|
| Example 1 | 1/30 |
| Example 2 | 1/30 |
| Comparative Example 1 | 30/30 |
| Comparative Example 2 | 29/30 |
| Comparative Example 3 | 27/30 |

It can be seen from the results of Experimental Example 2 that the effects achieved by the washers are insignificant but that the effects achieved by the anti-corrosive gaskets are significant under high-temperature and high-humidity conditions. It can also be seen from the results of Experimental Example 2 that the effects achieved by the anti-corrosive tubes are insignificant compared to the effects achieved by anti-corrosive gaskets.

### <Experimental Example 3>

The cylindrical secondary batteries manufactured according to Example 3, Comparative Example 3, and Comparative Example 4 were stored at normal temperature and normal humidity for six months in order to observe whether crimping units of the cylindrical secondary batteries were corroded.

The results are shown in Table 2 below.

**[Table 2]**

| | Occurrence of corrosion (number of corroded batteries /total number of batteries) |
|---|---|
| Example 3 | 0/20 |
| Comparative Example 3 | 18/20 |
| Comparative Example 4 | 18/20 |

Referring to Table 2 above, in the case in which cylindrical secondary batteries were stored for six months, corrosion was observed in some of the cylindrical secondary batteries, compared to Experimental Example 1, in which the cylindrical secondary batteries were stored for one month in normal-temperature and normal-humidity conditions. That is, in the case in which the anti-corrosive gaskets, each of which includes a sodium-nitrate-based material, were used, the crimping units of all of the cylindrical secondary batteries were not corroded. In Comparative Example 3, in which the anti-corrosive tubes were applied, and Comparative Example 4, in which the anti-corrosive washers were applied, however, the crimping units of 18 cylindrical secondary batteries, among the 20 cylindrical secondary batteries, were corroded.

In a cylindrical secondary battery, a crimping unit, which is the end of a battery can of the battery, is cut at the time of manufacturing the cylindrical secondary battery, with the result that Fe, which is a material constituting an inner layer of the coating layer of the battery can, is exposed to the outside. Consequently, the crimping unit may be relatively easily corroded. However, in the case in which an anti-corrosive gasket is applied, as in the present invention, it is possible to completely prevent the crimping unit of the cylindrical secondary battery from being corroded.

As can be seen from the above description, the present invention is a landmark invention that proposes a way of using a cylindrical battery in high-temperature and high-humidity conditions for a long period of time by solving the problems that cannot be solved in the conventional art.

Although the invention has been described with reference to the limited embodiments and the accompanying drawings, those skilled in the art will appreciate that the present invention is limited thereto and that various changes and modifications are possible, without departing from the accompanying claims and equivalents thereof as well as the technical idea of the present invention.

### [Industrial Applicability]

A cylindrical battery according to an embodiment of the present invention uses an anti-corrosive gasket including a volatile corrosion inhibitor and a base resin. Consequently, the cylindrical battery according to the present invention achieves remarkable anti-corrosion effects in high-temperature and high-humidity conditions. Specifically, it is possible to provide an anti-corrosion-treated cylindrical battery that is capable of preventing the end of a crimping unit of the battery from being corroded in high-temperature and high-humidity conditions. This effect cannot be achieved by various conventional anti-corrosion technologies, such as those of a conventional anti-corrosive washer and a conventional anti-corrosive tube, in the field of cylindrical batteries.

## Claims

1. An anti-corrosion-treated cylindrical battery (100) having an electrode assembly (10), comprising a positive electrode, a negative electrode, and a separator, mounted therein, the anti-corrosion-treated cylindrical battery comprising:
a cylindrical can (20) having an open upper end;
a cap assembly (30) coupled to the cylindrical can (20) via a crimping unit located at an outer circumferential surface of an upper part of the cylindrical can, the crimping unit being formed by bending a portion of the open upper end inwards; and
an anti-corrosive gasket (40) interposed between the cylindrical can (20) and the cap assembly (30), wherein
the anti-corrosive gasket (40) comprises a volatile corrosion inhibitor, comprising a polymer resin and a sodium-nitrate-based material, and a base resin.

2. The anti-corrosion-treated cylindrical battery (100) according to claim 1, wherein
1 to 30 weight percent of the volatile corrosion inhibitor is provided based on 100 weight percent of the base resin,
3 to 30 weight percent of the sodium-nitrate-based material is provided based on 100 weight percent of the polymer resin, and
the sodium-nitrate-based material is at least one of NaNO₂ and NaNo₃, the sodium-nitrate-based material being dispersed in the anti-corrosive gasket.

3. The anti-corrosion-treated cylindrical battery (100) according to claim 1, wherein
the polymer resin and the base resin are identical to each other or different from each other, and
each of the polymer resin and the base resin is one or a mixture of two or more selected from a group consisting of polypropylene (PP), polybutylene terephthalate, polyethylene, polyethylene terephthalate, Teflon, polytetrafluoroethylene, rayon, mixed yarn, polyviscose, and polynosic.

4. The anti-corrosion-treated cylindrical battery (100) according to claim 3, wherein each of the polymer resin and the base resin is polypropylene (PP).

5. The anti-corrosion-treated cylindrical battery (100) according to claim 1, wherein
the sodium-nitrate-based material is dispersed in the anti-corrosive gasket (40) in a crystalline state, and
gamma-iron (III) oxide (γ-Fe₂O₃) having a thickness ranging from 10Å to 1000 Å is formed at an end of the crimping unit of the cylindrical can due to the sodium-nitrate-based material.

6. The anti-corrosion-treated cylindrical battery (100) according to claim 1, wherein the cap assembly (30) comprises:
a top cap configured to seal the open end of the cylindrical can; and
a safety vent (36), one surface of which contacts a side surface, an upper surface, and a lower surface of the top cap and the other surface of which is bent so as to contact an inner circumferential surface of the gasket, the safety vent being electrically connected to the electrode assembly.

7. The anti-corrosion-treated cylindrical battery (100) according to claim 1, wherein the cap assembly (30) comprises:
a top cap configured to seal the open end of the cylindrical can (20), the top cap being disposed so as to contact a protruding portion of the gasket (40);
a positive temperature coefficient (PTC) element disposed so as to contact the top cap; and
a safety vent (36), one surface of which contacts the PTC element and a portion of the other surface of which is disposed so as to contact the gasket (40).

8. The anti-corrosion-treated cylindrical battery (100) according to claim 7, further comprising a current interrupt device welded to a lower end of the safety vent (36), a lower part of the current interrupt device being configured so as to be connectable to the electrode assembly.

9. A battery pack comprising a plurality of anti-corrosion-treated cylindrical batteries according to any one of claims 1 to 7, wherein the anti-corrosion-treated cylindrical batteries are electrically connected to each other.

10. The battery pack according to claim 9, wherein the battery pack is used as a power source for at least one middle- or large-sized device selected from a group consisting of a power tool, an electric automobile, such as an electric vehicle (EV), a hybrid electric vehicle (HEV), or a plug-in hybrid electric vehicle (PHEV), an electric truck, an electric commercial vehicle, and a power storage system.

11. A method of manufacturing an anti-corrosion-treated cylindrical battery according to any one of claims 1 to 8, the method comprising:
preparing and pulverizing a sodium-nitrate-based material, which is at least one of NaNO₂ and NaNo₃;
mixing the pulverized sodium-nitrate-based material with a polymer resin to manufacture a volatile corrosion inhibitor;
mixing the volatile corrosion inhibitor with a base resin to manufacture an anti-corrosive gasket; and
interposing the anti-corrosive gasket between a cylindrical can, having an electrode assembly mounted therein, and a cap assembly, coupled to the cylindrical can via a crimping unit located at an outer circumferential surface of an upper part of the cylindrical can, the crimping unit being formed by bending a portion of an open upper end of the cylindrical can inwards.

12. The method according to claim 11, further comprising:
after the step of interposing the anti-corrosive gasket between the cylindrical can and the cap assembly,
generating at least one of nitrous acid (HNO₂) and nitric acid (HNo₃) through a reaction between the sodium-nitrate-based material in the anti-corrosive gasket and moisture; and
oxidizing a surface of the cylindrical can through at least one of nitrous acid (HNO₂) and nitric acid (HNo₃) to form gamma-iron (III) oxide (γ-Fe₂O₃) having a thickness ranging from 10Å to 1000 Å.

## Patentansprüche

1. Antikorrosionsbehandelte zylindrische Batterie (100), welche eine Elektrodenanordnung (10) aufweist, welche eine positive Elektrode, eine negative Elektrode und einen Separator umfasst, welche darin montiert sind, wobei die antikorrosionsbehandelte zylindrische Batterie umfasst:
eine zylindrische Dose (20), welche ein offenes oberes Ende aufweist;
eine Kappenanordnung (30), welche mit der zylindrischen Dose (20) über eine Crimp-Einheit gekoppelt ist, welche an einer äußeren Umfangsfläche eines oberen Teils der zylindrischen Dose angeordnet ist, wobei die Crimp-Einheit durch Biegen eines Abschnitts des offenen oberen Endes nach innen gebildet ist; und
eine antikorrosive Dichtung (40), welche zwischen der zylindrischen Dose (20) und der Kappenanordnung (30) eingefügt ist, wobei
die antikorrosive Dichtung (40) einen volatilen Korrosionsinhibitor, welcher ein Polymerharz und ein Material auf Natriumnitrat-Basis umfasst, und ein Basisharz umfasst.

2. Antikorrosionsbehandelte zylindrische Batterie (100) nach Anspruch 1, wobei
1 bis 30 Gewichtsprozent des volatilen Korrosionsinhibitors auf Grundlage von 100 Gewichtsprozent des Basisharzes bereitgestellt ist/sind,
3 bis 30 Gewichtsprozent des Materials auf Natriumnitrat-Basis auf Grundlage von 100 Gewichtsprozent des Polymerharzes bereitgestellt sind, und
das Material auf Natriumnitrat-Basis wenigstens eines aus NaNO₂ und NaNo₃ ist, wobei das Material auf Natriumnitrat-Basis in der antikorrosiven Dichtung dispergiert ist.

3. Antikorrosionsbehandelte zylindrische Batterie (100) nach Anspruch 1, wobei
das Polymerharz und das Basisharz identisch zueinander oder voneinander verschieden sind, und
jedes aus dem Polymerharz und dem Basisharz eines oder ein Gemisch von zwei oder mehr ist, welches/welche aus einer Gruppe ausgewählt ist/sind, bestehend aus Polypropylen (PP), Polybutylenterephthalat, Polyethylen, Polyethylenterephthalat, Teflon, Polytetrafluorethylen, Rayon, Mischgarn, Polyviskose und Polynosic.

4. Antikorrosionsbehandelte zylindrische Batterie (100) nach Anspruch 3, wobei jedes aus dem Polymerharz und dem Basisharz Polypropylen (PP) ist.

5. Antikorrosionsbehandelte zylindrische Batterie (100) nach Anspruch 1, wobei
das Material auf Natriumnitrat-Basis in der antikorrosiven Dichtung (40) in einem kristallinen Zustand dispergiert ist, und
Gamma-Eisen (III)-Oxid (γ-Fe₂O₃), welches eine Dicke im Bereich von 10 Å bis 1000 Å aufweist, an einem Ende der Crimp-Einheit der zylindrischen Dose aufgrund des Materials auf Natriumnitrat-Basis gebildet ist.

6. Antikorrosionsbehandelte zylindrische Batterie (100) nach Anspruch 1, wobei die Kappenanordnung (30) umfasst:
eine obere Kappe, welche dazu eingerichtet ist, das offene Ende der zylindrischen Dose abzudichten; und
ein Sicherheitsventil (36), wobei eine Fläche davon eine Seitenfläche, eine obere Fläche und eine untere Fläche der oberen Kappe kontaktiert und die andere Fläche davon derart gebogen ist, dass sie eine innere Umfangsfläche der Dichtung kontaktiert, wobei das Sicherheitsventil elektrisch mit der Elektrodenanordnung verbunden ist.

7. Antikorrosionsbehandelte zylindrische Batterie (100) nach Anspruch 1, wobei die Kappenanordnung (30) umfasst:
eine obere Kappe, welche dazu eingerichtet ist, das offene Ende der zylindrischen Dose (20) abzudichten; wobei die obere Kappe derart angeordnet ist, dass sie einen vorstehenden Abschnitt der Dichtung (40) kontaktiert;
ein Element mit einem positiven Temperaturkoeffizienten (PTC), welches derart angeordnet ist, dass es die obere Kappe kontaktiert; und
ein Sicherheitsventil (36), wobei eine Fläche davon das PTC-Element kontaktiert und ein Abschnitt der anderen Fläche davon derart angeordnet ist, dass er die Dichtung (40) kontaktiert.

8. Antikorrosionsbehandelte zylindrische Batterie (100) nach Anspruch 7, ferner umfassend eine Stromunterbrechungsvorrichtung, welche an ein unteres Ende des Sicherheitsventils (36) geschweißt ist, wobei ein unterer Teil der Stromunterbrechungsvorrichtung dazu eingerichtet ist, mit der Elektrodenanordnung verbindbar zu sein.

9. Batteriepack, umfassend eine Mehrzahl antikorrosionsbehandelter zylindrischer Batterien (100) nach einem der Ansprüche 1 bis 7, wobei die antikorrosionsbehandelten zylindrischen Batterien elektrisch miteinander verbunden sind.

10. Batteriepack nach Anspruch 9, wobei der Batteriepack als eine Energiequelle für wenigstens eine Vorrichtung mittlerer oder großer Größe verwendet wird, welche ausgewählt ist aus einer Gruppe, bestehend aus einem Elektrowerkzeug, einem elektrischen Automobil, beispielsweise einem Elektrofahrzeug (EV), einem Hybrid-Elektro-Fahrzeug (HEV) oder einem Plug-in-Hybrid-Elektro-Fahrzeug (PHEV), einem Elektro-Lkw, einem Elektro-Nutzfahrzeug und einem Energiespeichersystem.

11. Verfahren zur Herstellung einer antikorrosionsbehandelten zylindrischen Batterie nach einem der Ansprüche 1 bis 8, wobei das Verfahren umfasst:
Vorbereiten und Pulverisieren eines Materials auf Natriumnitrat-Basis, welches wenigstens eines aus NaNo₂ und NaNo₃ ist;
Mischen des pulverisierten Materials auf Natriumnitrat-Basis mit einem Polymerharz, um einen volatilen Korrosionsinhibitor herzustellen;
Mischen des volatilen Korrosionsinhibitors mit einem Basisharz, um eine antikorrosive Dichtung herzustellen; und
Einfügen der antikorrosiven Dichtung zwischen einer zylindrischen Dose, welche eine Elektrodenanordnung aufweist, welche darin montiert ist, und einer Kappenanordnung, welche mit der zylindrischen Dose über eine Crimp-Einheit gekoppelt ist, welche an einer äußeren Umfangsfläche eines oberen Teils der zylindrischen Dose angeordnet ist, wobei die Crimp-Einheit durch Biegen eines Abschnitts eines offenen oberen Endes der zylindrischen Dose nach innen gebildet wird.

12. Verfahren nach Anspruch 11, ferner umfassend:
nach dem Schritt des Einfügens der antikorrosiven Dichtung zwischen der zylindrischen Dose und der Kappenanordnung,
Erzeugen wenigstens eines aus salpetriger Säure (HNO₂) und Salpetersäure (HNo₃) durch eine Reaktion zwischen dem Material auf Natriumnitrat-Basis in der antikorrosiven Dichtung und Feuchtigkeit; und
Oxidieren einer Fläche der zylindrischen Dose durch wenigstens eines aus salpetriger Säure (HNO₂) und Salpetersäure (HNo₃), um Gamma-Eisen (III)-Oxid (γ-Fe₂O₃) zu bilden, welches eine Dicke im Bereich von 10 Å bis 1000 Å aufweist.

## Revendications

1. Batterie cylindrique traitée contre la corrosion (100) ayant un assemblage d'électrodes (10), comprenant une électrode positive, une électrode négative, et un séparateur, monté à l'intérieur de celle-ci, la batterie cylindrique traitée contre la corrosion comprenant :
un boîtier cylindrique (20) ayant une extrémité supérieure ouverte ;
un ensemble capuchon (30) couplé au boîtier cylindrique (20) via une unité de sertissage située au niveau d'une surface circonférentielle externe d'une partie supérieure du boîtier cylindrique, l'unité de sertissage étant formée par pliage d'une partie de l'extrémité supérieure ouverte vers l'intérieur ; et
un joint anticorrosion (40) interposé entre le boîtier cylindrique (20) et l'ensemble capuchon (30), dans laquelle
le joint anticorrosion (40) comprend un inhibiteur de corrosion volatil, comprenant une résine polymère et un matériau à base de nitrate de sodium, et une résine de base.

2. Batterie cylindrique traitée contre la corrosion (100) selon la revendication 1, dans laquelle
1 à 30 pour cent en poids de l'inhibiteur de corrosion volatil est fourni sur la base de 100 pour cent en poids de la résine de base,
3 à 30 pour cent en poids du matériau à base de nitrate de sodium est fourni sur la base de 100 pour cent en poids de la résine polymère, et
le matériau à base de nitrate de sodium est au moins un parmi NaNO₂ et NaNO₃, le matériau à base de nitrate de sodium étant dispersé dans le joint anticorrosion.

3. Batterie cylindrique traitée contre la corrosion (100) selon la revendication 1, dans laquelle
la résine polymère et la résine de base sont identiques l'une à l'autre ou différentes l'une de l'autre, et
chacune de la résine polymère et de la résine de base est un ou un mélange de deux ou plus choisis dans un groupe constitué du polypropylène (PP), du poly(téréphtalate de butylène), du polyéthylène, du poly(téréphtalate d'éthylène), du Téflon, du polytétrafluoroéthylène, de la rayonne, du fil mélangé, du polyviscose, et du polynosique.

4. Batterie cylindrique traitée contre la corrosion (100) selon la revendication 3, dans laquelle chacune de la résine polymère et de la résine de base est du polypropylène (PP).

5. Batterie cylindrique traitée contre la corrosion (100) selon la revendication 1, dans laquelle
le matériau à base de nitrate de sodium est dispersé dans le joint anticorrosion (40) à l'état cristallin, et
de l'oxyde de fer gamma (III) (_{Y}-Fe₂O₃) ayant une épaisseur allant de 10 Å à 1 000 Å est formé au niveau d'une extrémité de l'unité de sertissage du boîtier cylindrique en raison du matériau à base de nitrate de sodium.

6. Batterie cylindrique traitée contre la corrosion (100) selon la revendication 1, dans laquelle l'ensemble capuchon (30) comprend :
un capuchon supérieur configuré pour sceller l'extrémité ouverte du boîtier cylindrique ; et
un évent de sécurité (36), dont une surface entre en contact avec une surface latérale, une surface supérieure, et une surface inférieure du capuchon supérieur et dont l'autre surface est pliée afin d'entrer en contact avec une surface circonférentielle interne du joint, l'évent de sécurité étant connecté électriquement à l'ensemble électrode.

7. Batterie cylindrique traitée contre la corrosion (100) selon la revendication 1, dans laquelle l'ensemble capuchon (30) comprend :
un capuchon supérieur configuré pour sceller l'extrémité ouverte du boîtier cylindrique (20), le capuchon supérieur étant disposé de façon à entrer en contact avec une partie en saillie du joint (40) ;
un élément à coefficient de température positive (CTP) disposé de façon à entrer en contact avec le capuchon supérieur ; et
un évent de sécurité (36), dont une surface entre en contact avec l'élément CTP et dont une partie de l'autre surface est disposée de façon à entrer en contact avec le joint (40).

8. Batterie cylindrique traitée contre la corrosion (100) selon la revendication 7, comprenant en outre un dispositif de coupure de courant soudé à une extrémité inférieure de l'évent de sécurité (36), une partie inférieure du dispositif de coupure de courant étant configurée de façon à pouvoir être connectée à l'ensemble électrode.

9. Bloc-batterie comprenant une pluralité de batteries cylindriques traitées contre la corrosion selon l'une quelconque des revendications 1 à 7, dans lequel les batteries cylindriques traitées contre la corrosion sont connectées électriquement les unes aux autres.

10. Bloc-batterie selon la revendication 9, dans lequel le bloc-batterie est utilisé comme source d'alimentation pour au moins un dispositif de taille moyenne ou de grande taille choisi dans un groupe constitué d'un outil motorisé, d'une automobile électrique, telle qu'un véhicule électrique (VE), un véhicule électrique hybride (VEH), ou un véhicule électrique hybride rechargeable (VEHR), un camion électrique, un véhicule utilitaire électrique, et un système de stockage d'énergie.

11. Procédé de fabrication d'une batterie cylindrique traitée contre la corrosion selon l'une quelconque des revendications 1 à 8, le procédé comprenant :
la préparation et la pulvérisation d'un matériau à base de nitrate de sodium, qui est au moins un parmi NaNO₂ et NaNO₃ ;
le mélange du matériau à base de nitrate de sodium pulvérisé à une résine polymère pour fabriquer un inhibiteur de corrosion volatil ;
le mélange de l'inhibiteur de corrosion volatil à une résine de base pour fabriquer un joint anticorrosion ; et
l'interposition du joint anticorrosion entre un boîtier cylindrique, ayant un ensemble électrode monté à l'intérieur de celui-ci, et un ensemble capuchon, couplé au boîtier cylindrique via une unité de sertissage située au niveau d'une surface circonférentielle externe d'une partie supérieure du boîtier cylindrique, l'unité de sertissage étant formée par pliage d'une partie d'une extrémité supérieure ouverte du boîtier cylindrique vers l'intérieur.

12. Procédé selon la revendication 11, comprenant en outre :
après l'étape d'interposition du joint anticorrosion entre le boîtier cylindrique et l'ensemble capuchon,
la génération d'au moins un parmi l'acide nitreux (HNO₂) et l'acide nitrique (HNO₃) par l'intermédiaire d'une réaction entre le matériau à base de nitrate de sodium dans le joint anticorrosion et l'humidité ; et
l'oxydation d'une surface du boîtier cylindrique par l'intermédiaire d'au moins un parmi l'acide nitreux (HNO₂) et l'acide nitrique (HNO₃) pour former de l'oxyde de fer gamma (III) (Y-Fe₂O₃) ayant une épaisseur allant de 10 Å à 1 000 Å.
